(19) Europäisches Patentamt
European Patent Office
Office européen des brevets

(11) Publication number: **0 444 900 B1**

(12) **EUROPEAN PATENT SPECIFICATION**

(45) Date of publication of patent specification: **27.09.95**

(51) Int. Cl.[6]: **C08L 53/00**, //(C08L53/00, 23:20)

(21) Application number: **91301588.9**

(22) Date of filing: **27.02.91**

(54) **Polymer blends for use in providing peelable heat seals.**

(30) Priority: **28.02.90 US 486561**

(43) Date of publication of application:
**04.09.91 Bulletin 91/36**

(45) Publication of the grant of the patent:
**27.09.95 Bulletin 95/39**

(84) Designated Contracting States:
**AT BE CH DE DK ES FR GB GR IT LI LU NL SE**

(56) References cited:

**PATENT ABSTRACTS OF JAPAN vol. 9, no. 241 (C-306)(1964)**

(73) Proprietor: **SHELL OIL COMPANY**
**900, Louisiana Street**
**Houston**
**Texas 77002 (US)**

(72) Inventor: **Lee, Robert W.**
**3202 Ashton Park Drive**
**Houston,**
**Texas 77082 (US)**
Inventor: **Hwo, Charles C.**
**2710 Sugarwood Drive**
**Sugarland,**
**Texas 77478 (US)**

(74) Representative: **Cresswell, Thomas Anthony et al**
**J.A. KEMP & CO.**
**14 South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 444 900 B1

## Description

The present invention relates to polymer blends for use in providing a peelable heat seal between substrates, such as a rigid container and a peelable lid therefor, or in a flexible film package made from films and/or laminates. Seals produced using these blends are characterised by an adequate, nearly constant peel strength when used on rigid containers including styrenic containers and polyvinyl chloride (PVC) containers. The seals can be formed over a wide range of heat seal temperatures and are easily peelable. The term peelable refers to a seal failure of which occurs primarily at the interface of the sealing surfaces, rather than by film tearing.

A widely used package comprises a laminated lid material peelably bonded to a rigid container. The lid material is typically made from a backing material coated with a heat sealable material so that it can be easily peeled from the rigid container. The backing material may be any material strong enough to close said container and also to provide any barrier properties which may be needed. The backing material may be, for example, metal foil, polypropylene film, polyester film, nylon film or paper. The package is opened by peeling off the lid material, and this must generally be done without destroying the integrity of the lid itself. Accordingly, to provide a satisfactory package of this type, a balance of properties is necessary, i.e. the seal strength must be adequate to maintain the package in a closed and protective condition, while also exhibiting such release properties as will permit opening by peeling when desired. In the past there have been no inexpensive and effective peel seal closures for use with rigid styrenic containers or with PVC-based containers because no single peelable adhesive could be used with both types of container.

Most commercial peel seal materials are olefin-based copolymers that can not be used for containers of polystyrene or PVC since there is no adhesion between the former and the latter two types of polymer.

At the present time, in order to use the easy open, peelable lid concept on polystyrene or PVC rigid containers, the manufacturer must coextrude polystyrene or PVC with high density polyethylene (HDPE) to form a container with a HDPE surface which can be sealed with peel seal material. This is a costly process.

One type of peel seal material currently available for polystyrene containers is an ethylene/vinyl acetate copolymer (EVA) based liquor. Use of this material involves venting and recovering of organic solvent while EVA often produces organoleptic problems in food which is packaged in such containers.

Various references teach heat sealable films capable of forming peel seals, such as US-A-4,550,141; US-A-4,539,263; US-A-4,414,053 and US-A-3,879,492. However, these references do not appear to teach a composition which will provide a peelable seal for rigid styrenic, PVC or olefinic containers.

The invention provides a polymer blend which can be used to provide peelable seals which will adhere to a variety of substrates and can be used with chemically compatible backing materials to provide peel sealable packages, such as polystyrene, PVC or olefinic containers. The invention thus provides a blend which will provide a peelable seal for a wide variety of rigid containers.

According to the invention there is provided the use of a polymer blend (hereinafter referred to as "the blend of the invention") in providing a peelable heat seal between substrates, which comprises

(a) 5 to 50, preferably 10 to 40, especially 25 to 35, weight percent of a butene-1 homopolymer or copolymer having a melt index of 0.01 to 1000, preferably 0.1 to 500;

(b) 95 to 50, preferably 90 to 60, especially 75 to 65, weight percent of a styrenic-olefinic block copolymer; and

(c) 0 to 30 percent by weight of polypropylene, the weight percentages of (a), (b) and (c) being based on their combined weight.

This blend, when laminated between a backing material and a rigid container at a heat sealing temperature of between 177°C and 232°C (350°F and 450°F) as determined at sealing jaws, affords a peel strength of 0.18 to 2.3 kg per 2.54 cm (0.4 to 5 pounds per inch) between the backing material and the rigid container.

The invention also comprises a laminar structure suitable for use as a lid for a rigid container, said laminar structure comprising a backing material and a layer of the blend of the invention. The laminar structure can be a coextrudate of the backing material and the blend or can comprise the backing material coated with the blend. Such a laminar structure, e.g. using aluminum foil as backing material, yields an easy open, peelable lid material for styrenic, PVC or olefinic rigid containers. The laminar structure can be heat sealed onto PVC, crystal polystyrene, or impact modified polystyrene or olefinic containers. Lid stock made from the blend has a broad heat seal temperature range. The backing material is suitably selected from polystyrene, polypropylene film, aluminum foil, nylon film, polyester film, polycarbonate film, poly-4-methyl pentene-1 film and paper.

The invention further provides a peelably sealed rigid package comprising a rigid container having a lid sealed thereon with a film comprising the blend of the invention or a laminar structure according to the

invention. Preferably the rigid container is of a styrenic polymer, nylon polyester, polyvinyl chloride or an olefinic polymer.

The polymer blend of the invention may be formed into unoriented or oriented film by a casting or film blowing method. After fabrication the films can be heat sealed by sealing jaws at a preset temperature, pressure and dwell. These manufacturing techniques apply to film, although the blends can be formed into sheeting. Film refers to shaped plastics that are comparatively thin and have a maximum thickness of 0.245 mm (0.010 inches or 10 mils). Sheeting is a shaped plastic having a thickness greater than 0.254 mm (0.010 inches).

The laminar structure of the invention can be made by making two separate films that are then laminated, as by heat lamination. The films may be prefabricated by either film blowing (melt extrusion with a circular die) or the casting method (a flat die or slot die-melt extrusion process). Alternatively the laminar structure can be prepared by coextrusion.

The extrusion process starts with a polymer in a form that can be fed continuously into an extruder by means of a screw or pneumatic tube. Sometimes the polymers are combined with materials such as plasticizers, lubricants, stabilizers, and colorants by means of Banbury mixers. The resulting mix is extruded through rod shaped dies and chipped into pellets. Pelletized polymer is fed into a screw conveyor into the end of a screw-type extruder and is heated and made into viscous fluid in a cylinder by means of a revolving, helical screw. The sheet emitting from the die may be quenched on a temperature controlled chill roll. Finished films may be subject to a two-way stretching using continuous tenter-frame operations in biaxial orientation.

The term "polybutylene" is used herein to denote component (a) and refers to butene-1 homopolymer and butene-1 copolyers such as butene-1-ethylene copolymer and butene-1-propylene copolymer.

The polybutylene which is a basic component of the blends of this invention suitably is a product of a stereospecific polymerization procedure and is referred to as an "isotactic" or "stereospecific" polymer in that the repeating units of its polymeric chain all possess the same stereochemical configuration along the chain. This is to be contrasted with "atactic" polymers wherein the repeating units of the polymeric chain vary in a random configuration along the chain. The stereochemical nature of isotactic polybutylene required for use in novel adhesives may be readily observed from the following structural depiction thereof:

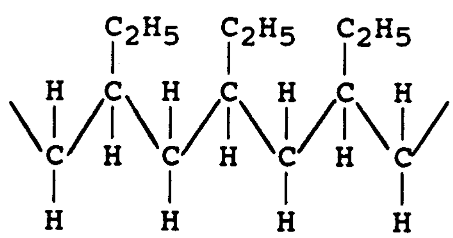

High molecular weight, isotactic polybutylenes utilized in the blends of this invention are prepared by the stereospecific polymerization of butene-1 monomer. Methods for conducting such polymerization procedures are well known to those skilled in the art; typical procedures being disclosed in US-A-3,197,452, and in NL-A-6507546. These procedures generally involve the use of polymerization initiators or catalysts for the polymerization of the butene-1 monomer to polymers of high molecular weight. Among the preferable catalytic systems utilized in such procedures are the reaction products of metal alkyl compounds, such as aluminum triethyl, and a heavy metal compound, such as the trihalides of Groups IV-VI metals in the Periodic Table, e.g. titanium, vanadium, chromium, zirconium, molybdenum and tungsten. The formation of polymers exhibiting substantial isotactic properties as well as the variations in the molecular weight thereof will thus depend on the nature of the polymerization catalyst, the nature of the co-reactants in the system and the reaction conditions being utilized.

Suitable isotactic polybutylenes are relatively rigid at normal temperatures but flow readily upon being heated. As noted, they must exhibit a high molecular weight. Thus, expressing molecular weight in terms of "melt flow," the applicable istotactic polybutylenes to be used in these novel adhesives should exhibit a melt flow in the range of from 0.1 to 500, preferably 0.2 to 300, more preferably from 0.4 to 40.0, still more preferably 0.4 to 7, especially 1 to 4. Typically, therefore, the polymer is a crystalline isotactic polymer having a melt index of 0.4 to 20. Such melt flow values are determined by the method described in ASTM D 1238-62 Te and are inversely related to molecular weight, i.e. the lower the melt flow value, the higher the

molecular weight. In addition, it should be noted that minor amounts, i.e. up to 5% by weight, of alpha-olefin comonomers, such as ethylene and propylene, may be present in the butene-1 polymerization system without any substantial loss of the herein-described desirable properties displayed by the resultant butene-1 polymer. A typical polymer is a high molecular weight, flexible polymer having a density of about $0.91 g/cm^3$.

The optional polypropylene component (c) of the blends of the invention is used to modify melt index or adhesive properties.

The polybutylene employed herein is preferably of a film-forming grade, and can be obtained commercially from the Shell Company or prepared as described in US-A-3,362,940.

The block copolymer component (b) of the blends of the present invention is well known and can be produced by conventional methods. The block copolymer can be produced in geometric forms referred to as linear, branched and radial. Preferred methods of production of the block copolymers involve the use of a lithium polymerization initiator, particularly a lithium alkyl. US-A-3,592,942 describes block copolymers and methods of their production. Linear block copolymers are typically produced by sequential addition of suitable monomers into a polymerization reactor in the presence of the lithium alkyl initiator. The living polymer chain grows through sequential polymerization. Linear block copolymers are also illustratively produced by coupling of two living polymer chains with a difunctional coupling agent such as a dihaloalkane. Branched block copolymer structures are obtained through coupling of living polymers chains with a coupling agent having a functionality of three or more. Use of a coupling agent which is non-symmetrical results in block polymer of a structure termed branched. The precise nature of any coupling agent does not contribute substantially to the properties of the block copolymer and may be ignored so far as a description of the polymers is concerned.

The block copolymer suitably has at least two blocks, one designated A of a polymerized vinyl aromatic compound and a second designated B of a polymerized conjugated alkadiene. It may, therefore, be in the form of an A-B-A block copolymer wherein the A blocks are of a monoalkenyl arene polymer and the B block is of a homopolymeric conjugated diene. The block copolymer can comprise 8% to 55% by weight, preferably 10% to 30% by weight, of block(s) A with the remainder being block(s) B. Each A block preferably has an average molecular weight of 5,000 to 125,000, preferably 7,000 to 60,000. Each B block preferably has an average molecular weight of 10,000 to 300,000, preferably 30,000 to 150,000.

The A blocks are produced by polymerization of a vinyl aromatic compound such as styrene or analogs of styrene such as α-methylstyrene or ring methylated styrenes including p-methylstyrene and α-methylstyrene and styrene is particularly preferred.

A B block is preferably a homopolymeric block of butadiene or isoprene but copolymers with a vinyl aromatic compound are also suitable so long as the B block predominantly comprises conjugated alkadiene units. Aliphatic unsaturation in the block copolymer (b) can be hydrogenated, while aromatic unsaturation is not hydrogenated to a significant extent. A particularly preferred non-hydrogenated B block is homopolymeric butadiene. In the case of butadiene, polymerization to give polymer units having a 1,2-structure or a 1,4-structure is possible. Preferred B blocks produced from butadiene have from 35% to 55% of units having a 1,2-structure with the remainder being units of a 1,4-structure.

Illustrative of the block copolymers which can be used as such or as precursors of hydrogenated block copolymers are block copolymers of the following types:

polystyrene-polybutadiene-polystyrene (SBS)
polystyrene-polyethylene-polybutadiene-polystryene (SEBS)
polystyrene-polyisoprene-polystyrene (SIS)
poly(α-methylstyrene)-polybutadiene-poly(α-methylstyrene)
poly(α-methylstyrene)-polyisoprene-poly(α-methylstyrene).

A hydrogenated block copolymer can be produced by substantially complete hydrogenation of the aliphatic unsaturation of the B block while very little of the aromatic unsaturation of the A blocks is affected. Such selective hydrogenation is conventional.

Hydrogenation of the block copolymer may be effected in conventional manner, for example using a catalyst formed by reaction of an aluminum alkyl with a nickel or cobalt carboxylate or alkoxide. Such a catalyst serves to partially or selectively hydrogenate the block copolymer in that at least 80% of the aliphatic unsaturation is hydrogenated while hydrogenating no more than 25% of the aromatic unsaturation. Preferably at least 99% of the aliphatic carbon-carbon double bonds are hydrogenated while less than 5% of the aromatic unsaturation is hydrogenated. Such selective hydrogenation is now conventional and is described in US-A-3,595,942 and US-B-27,145. For a general description of block copolymers and their production before and after hydrogenation see US-A-4,111,895.

The hydrogenated block copolymers can have an average molecular weight of from 25,000 to 350,000. Preferred hydrogenated block copolymers have a molecular weight from 35,000 to 300,000. Such hydrogenated block copolymers are commercially available and are sold by Shell Chemical Company under the tradename "KRATON" (RTM) G Thermoplastic Rubber.

The blends of the invention may further contain up to 25% by weight, preferably 10-20% by weight, of a plasticizing or extending oil in order to provide wetting action and/or viscosity control. The plasticizing oil can be, for example, a paraffinic or naphthenic oil. Petroleum derived oils which may be employed are relatively high boiling materials containing only a minor proportion of aromatic hydrocarbons (preferably less than 30%, more particularly less than 15%, by weight of the oil). Alternatively, the oil may be totally nonaromatic.

Other additives such as plasticizers, pigments, dye-stuffs, slip agents, or antiblock agents conventionally added to hot melt adhesives for various end uses contemplated may also be incorporated in minor amounts into the blends of the present invention.

The following Examples will serve to illustrate the present invention. As will become evident from the Examples, the blends of the present invention provide seals having a nearly constant peel strength over extended heat seal temperature ranges when used with a wide variety of container compositions.

EXAMPLES

Approximately 4.5 kg (ten pounds) of each two component formulation was dry blended and is listed in Table 1. Percentages are by weight.

TABLE 1

| BLEND NO. | % BLOCK COPOLYMER | % POLYBUTYLENE |
|---|---|---|
| 1 | 65 KRATON G1726X Rubber | 35 DP1560 |
| 2 | 70 " " " | 30 " |
| 3 | 75 " " " | 25 " |
| 4 | 100 " " " | --------- |
| 5 | 70 KRATON G1726X Rubber | 30 PB1710 |
| 6 | 70 " " " | 30 PB0300 |
| 7 | 65 KRATON D1102 Rubber | 35 DP1560 |
| 8 | 75 " " " | 25 " |
| 9 | 100 " " " | --------- |
| 10 | 65 KRATON D1107 Rubber | 35 DP1560 |
| 11 | 75 " " " | 25 " |
| 12 | 100 " " " | --------- |
| 13 | 75 " " " | 25 PB0300 |
| 14 | 65 " " " | 35 PB0300 |
| 15 | 75 " " " | 25 PB1710 |
| 16 | 65 " " " | 35 PB1710 |
| 17 | 65 KRATON D1111 Rubber | 35 DP1560 |
| 18 | 65 " " " | 35 PB0300 |
| 19 | 65 " " " | 35 PB1710 |
| 20 | 65 KRATON D1112 Rubber | 35 DP1560 |
| 21 | 65 " " " | 35 PB0300 |
| 22 | 65 " " " | 35 PB1710 |
| 23 | 65 KRATON D1117 Rubber | 35 DP1560 |
| 24 | 65 " " " | 35 PB0300 |
| 25 | 65 " " " | 35 PB1710 |

KRATON G1726X rubber is an SEBS triblock copolymer with a 30 wt% styrene content.
KRATON D1102 rubber is an SBS triblock copolymer with a 28 wt% styrene content.
KRATON D1107 rubber is an SIS triblock copolymer with a 14 wt% styrene content.
KRATON D1111 rubber is an SIS triblock copolymer with a 21 wt% styrene content.
KRATON D1112 rubber is an SIS triblock copolymer with a 14 wt% styrene content.
KRATON D1117 rubber is an SIS triblock copolymer with a 17 wt% styrene content.
DP1560 is a butene-1-ethylene copolymer containing 0.75% ethylene with a melt index of 4.0 which has been blended with 20 wt% polypropylene.
PB1710 is a butene-1-ethylene copolymer containing 0.75% ethylene and having a melt index of 1.0 which has been blended with 7 wt% polypropylene.
PB0300 is a homopolymer polybutylene with a melt index of 4.0.
All of the above polymers are available from Shell Chemical Company.
("KRATON" is a Registered Trade Mark)

Except for the 100% KRATON rubber blends (Nos. 4, 9 and 12) the blends were melt compounded using a 4.4 cm ($1\frac{1}{4}$ inch) Brabender extruder equipped with a two stage screw containing a Maddox mixing section at the end of the first stage. The extrusion conditions are listed below in Tables 2 and 2A.

TABLE 2

| FORMULATIONS | 1 | 2 | 3 | 5 | 6 | 7* | 8* | 10* | 11* | 13 | 14 |
|---|---|---|---|---|---|---|---|---|---|---|---|
| ZONE 1 TEMP., °C | 190 | 190 | 190 | 180 | 180 | 170 | 170 | 170 | 170 | 170 | 170 |
| " 2 " °C | 200 | 200 | 200 | 190 | 190 | 170 | 170 | 170 | 180 | 170 | 180 |
| " 3 " °C | 200 | 200 | 200 | 190 | 190 | 170 | 170 | 170 | 180 | 170 | 170 |
| " 4 " °C | 200 | 200 | 200 | 190 | 180 | 170 | 170 | 170 | 170 | 180 | 180 |
| MELT " °C | 206 | 210 | 210 | 204 | 195 | 180 | 180 | 180 | 187 | 200 | 195 |
| RPM | 76 | 70 | 70 | 70 | 63 | 125 | 125 | 125 | 123 | 98 | 91 |
| BACK PRESSURE kg | 204 | 204 | 204 | 159 | 181 | 408 | 408 | 408 | 454 | 318 | 272 |
| (lbs.) | (450) | (450) | (450) | (350) | (400) | (900) | (900) | (900) | (1000) | (700) | (600) |
| CUTTER FEED SETTING | 80 | 80 | 80 | 75 | 40 | 2 | 2 | 2 | 2 | 2 | 2 |
| BLADE SPEED SETTING | 90 | | 90 | 90 | 90 | 70 | | | | | |

* Used Cumberland pelletizer instead of "Farrs" customized pelletizer.

TABLE 2A

| FORMULATIONS | 15 | 16 | 17 | 18 | 19 | 20 | 21 | 22 | 23 | 24 | 25 |
|---|---|---|---|---|---|---|---|---|---|---|---|
| ZONE 1 TEMP., °C | 170 | 170 | 170 | 170 | 170 | 170 | 170 | 170 | 170 | 170 | 170 |
| " 2 " °C | 170 | 170 | 170 | 170 | 170 | 180 | 170 | 170 | 170 | 170 | 170 |
| " 3 " °C | 170 | 170 | 170 | 170 | 170 | 180 | 170 | 170 | 170 | 170 | 170 |
| " 4 " °C | 180 | 180 | 180 | 180 | 180 | 180 | 180 | 180 | 180 | 180 | 180 |
| MELT " °C | 196 | 195 | 200 | 200 | 200 | 204 | 205 | 205 | 199 | 203 | 203 |
| RPM | 80 | 80 | 125 | 125 | 125 | 90 | 110 | 110 | 102 | 105 | 108 |
| BACK PRESSURE kg | 272 | 272 | 227 | 318 | 408 | 272 | 272 | 272 | 227 | 227 | 227 |
| (lbs.) | (600) | (600) | (500) | (700) | (900) | (600) | (600) | (600) | (500) | (500) | (500) |
| CUTTER* FEED SET | 2 | 2 | 3 | 3 | 3 | 3 | 3 | 3 | 2.5 | 2.5 | 2.5 |

* Used Cumberland Pelletizer.

All compounding extrusions were made using an 80/20 screen pack and a single strand die. The strand was double strung in a water bath so as to provide additional cooling time.

An approximately 0.0254 mm (1 mil) thick layer of the various blends was coextruded onto a 0.076 mm (3 mil) thick film of polypropylene 5C08, available from the Shell Chemical Company, using a three layer die. Polypropylene was extruded in both the Brabender and Haake extruders. The blends were extruded in the Killion extruder. Table 3 shows the extrusion conditions used for the polypropylene film extruded in the

Brabender and Haake extruders and each of the blends which was extruded in the Killion extruder.

TABLE 3

EXTRUSION CONDITIONS

| FORMULATION | | 1 | 2 | 3 | 4 | 5 | 6 | 7 | 8 | 9 | 10 | 11 | 12 |
|---|---|---|---|---|---|---|---|---|---|---|---|---|---|
| BRABENDER | ZONE 1, °C | 190 | 190 | 190 | 190 | 190 | 190 | 190 | 190 | 190 | 190 | 190 | 190 |
| " | " 2, °C | 210 | 210 | 210 | 210 | 210 | 210 | 210 | 210 | 210 | 210 | 210 | 210 |
| " | " 3, °C | " | " | " | " | " | " | " | " | " | " | " | " |
| " | " 4, °C | " | " | " | " | " | " | " | " | " | " | " | " |
| " | DIE, °C | " | " | " | " | " | " | " | " | " | " | " | " |
| " | ADAPTER, °C | " | " | " | " | " | " | " | " | " | " | " | " |
| " | RPM | 29 | 29 | 29 | 29 | 29 | 29 | 29 | 29 | 29 | 29 | 29 | 29 |
| " | BACK PRES., kg | 453 | 453 | 453 | 453 | 453 | 453 | 453 | 453 | 453 | 453 | 453 | 453 |
| | (lbs.) | (1000) | (1000) | (1000) | (1000) | (1000) | (1000) | (1000) | (1000) | (1000) | (1000) | (1000) | (1000) |
| HAAKE | ZONE 1, °C | 180 | 180 | 180 | 180 | 180 | 180 | 180 | 180 | 180 | 180 | 180 | 180 |
| " | " 2, °C | 210 | 210 | 210 | 210 | 210 | 210 | 210 | 210 | 210 | 210 | 210 | 210 |
| " | " 3, °C | " | " | " | " | " | " | " | " | " | " | " | " |
| " | ADAPTER, °C | " | " | " | " | " | " | " | " | " | " | " | " |
| " | RPM | 76 | 76 | 76 | 76 | 76 | 76 | 76 | 76 | 76 | 76 | 76 | 76 |
| " | BACK PRES., kg | 408 | 408 | 408 | 408 | 408 | 408 | 408 | 408 | 408 | 408 | 408 | 408 |
| | (lbs.) | (900) | (900) | (900) | (900) | (900) | (900) | (900) | (900) | (900) | (900) | (900) | (900) |
| KILLION | ZONE 1, °C | 177 | 177 | 177 | 177 | 177 | 177 | 177 | 177 | 177 | 177 | 177 | 177 |
| | (°F) | (350) | (350) | (350) | (350) | (350) | (350) | (350) | (350) | (350) | (350) | (350) | (350) |
| " | " 2, °C | 204 | 204 | 204 | 204 | 204 | 204 | 182 | 177 | 177 | 177 | 177 | 177 |
| | (°F) | (400) | (400) | (400) | (400) | (400) | (400) | (360) | (350) | (350) | (350) | (350) | (350) |
| " | " 3, °C | 207 | 207 | 207 | 207 | 207 | 207 | 182 | 204 | 204 | 204 | 204 | 204 |
| | (°F) | (405) | (405) | (405) | (405) | (405) | (405) | (360) | (400) | (400) | (400) | (400) | (400) |
| " | ADAPTER, °C | 204 | 204 | 204 | 204 | 204 | 204 | 188 | 191 | 191 | 191 | 191 | 191 |
| | (°F) | (400) | (400) | (400) | (400) | (400) | (400) | (370) | (375) | (375) | (375) | (375) | (375) |
| " | RPM | 23 | 24 | 24 | 27 | 27 | 27 | 30 | 42 | 39 | 42 | 42 | 45 |
| " | AMPS | 3.4 | 3.5 | 3.5 | 4.2 | 5.8 | 4.0 | 7.2 | 5.9 | 5.9 | 3.5 | 6.0 | 7.0 |
| " | MELT, °C | 218 | 216 | 214 | 218 | 219 | 225 | 225 | 224 | 196 | 202 | 193 | 202 |
| | (°F) | (425) | (420) | (418) | (425) | (427) | (437) | (437) | (435) | (385) | (395) | (380) | (395) |
| " | BACK PRES., kg | 181 | 227 | 227 | 272 | 318 | 318 | 318 | 340 | 340 | 318 | 318 | 499 |
| | (lbs.) | (400) | (500) | (500) | (600) | (700) | (700) | (700) | (750) | (750) | (700) | (700) | (1100) |

Chill water temperature was set at 15 °C, and an air knife was used for all runs.

Depending on film thickness measurement the chill roll speed was adjusted between 0.0975 m/s (19.2 ft/min) and 0.107 m/s (21.0 ft/min.)

Formulations # 4, 9 and 12 pellets were very sticky and required hand-feeding of the pellets into the Killion extruder feed section.

TABLE 3A

EXTRUSION CONDITIONS

| FORMULATION | | 13 | 14 | 15 | 16 | 17 | 18 | 19 | 20 | 21 | 22 | 23 | 24 | 25 |
|---|---|---|---|---|---|---|---|---|---|---|---|---|---|---|
| BRABENDER | ZONE 1, °C | 190 | 190 | 190 | 190 | 190 | 190 | 190 | 190 | 190 | 190 | 190 | 190 | 190 |
| " | " 2, °C | 210 | 210 | 210 | 210 | 210 | 210 | 210 | 210 | 210 | 210 | 210 | 210 | 210 |
| " | " 3, °C | " | " | " | " | " | " | " | " | " | " | " | " | " |
| " | " 4, °C | " | " | " | " | " | " | " | " | " | " | " | " | " |
| " | DIE, °C | " | " | " | " | " | " | " | " | " | " | " | " | " |
| " | ADAPTER, °C | " | " | " | " | " | " | " | " | " | " | " | " | " |
| " | RPM | 29 | 29 | 29 | 29 | 29 | 29 | 29 | 29 | 29 | 29 | 29 | 29 | 29 |
| " | BACK PRES., kg | 453 | 453 | 453 | 453 | 453 | 453 | 453 | 453 | 453 | 453 | 453 | 453 | 453 |
| | (lbs.) | (1000) | (1000) | (1000) | (1000) | (1000) | (1000) | (1000) | (1000) | (1000) | (1000) | (1000) | (1000) | (1000) |
| HAAKE | ZONE 1, °C | 180 | 180 | 180 | 180 | 180 | 180 | 180 | 180 | 180 | 180 | 180 | 180 | 180 |
| " | " 2, °C | 210 | 210 | 210 | 210 | 210 | 210 | 210 | 210 | 210 | 210 | 210 | 210 | 210 |
| " | " 3, °C | " | " | " | " | " | " | " | " | " | " | " | " | " |
| " | ADAPTER, °C | " | " | " | " | " | " | " | " | " | " | " | " | " |
| " | RPM | 76 | 76 | 76 | 76 | 76 | 76 | 76 | 76 | 76 | 76 | 76 | 76 | 76 |
| " | BACK PRES., kg | 408 | 408 | 408 | 408 | 177 | 177 | 177 | 177 | 177 | 177 | 177 | 177 | 177 |
| | (lbs.) | (900) | (900) | (900) | (900) | (350) | (350) | (350) | (350) | (350) | (350) | (350) | (350) | (350) |
| KILLION | ZONE 1, °C | 177 | 177 | 177 | 177 | 177 | 177 | 177 | 177 | 177 | 177 | 177 | 177 | 177 |
| | (°F) | (350) | (350) | (350) | (350) | (350) | (350) | (350) | (350) | (350) | (350) | (350) | (350) | (350) |
| " | " 2, °C | 204 | 204 | 204 | 204 | 177 | 177 | 177 | 177 | 177 | 177 | 177 | 177 | 177 |
| | (°F) | (400) | (400) | (400) | (400) | (350) | (350) | (350) | (350) | (350) | (350) | (350) | (350) | (350) |
| " | " 3, °C | 204 | 204 | 204 | 204 | 177 | 177 | 177 | 177 | 177 | 177 | 177 | 177 | 177 |
| | (°F) | (400) | (400) | (400) | (400) | (350) | (350) | (350) | (350) | (350) | (350) | (350) | (350) | (350) |
| " | ADAPTER, °C | 204 | 204 | 204 | 204 | 204 | 204 | 204 | 210 | 210 | 210 | 210 | 210 | 210 |
| | (°F) | (400) | (400) | (400) | (400) | (400) | (400) | (400) | (410) | (410) | (410) | (410) | (410) | (410) |
| " | RPM | 28 | 28 | 30 | 30 | 20 | 20 | 20 | 20 | 20 | 20 | 20 | 22 | 20 |
| " | AMPS | 4.2 | 5.0 | 3.5 | 4.0 | 6.0 | 4.2 | 6.2 | 3.0 | 3.0 | 3.0 | 3.0 | 2.8 | 2.5 |
| " | MELT, °C | 218 | 218 | 216 | 214 | 218 | 216 | 221 | 232 | 232 | 232 | 232 | 232 | 235 |
| | (°F) | (425) | (425) | (420) | (418) | (425) | (420) | (430) | (450) | (450) | (450) | (450) | (450) | (455) |
| " | BACK PRES., kg | 227 | 272 | 318 | 318 | 363 | 363 | 431 | 318 | 318 | 318 | 177 | 149 | 232 |
| | (lbs.) | (500) | (600) | (700) | (700) | (800) | (800) | (950) | (700) | (700) | (700) | (350) | (300) | (250) |

Chill water set at 15 °C, and an air knife was used for all runs.

Depending on film thickness measurement the chill roll speed was adjusted between 0.0808 m/s (15.9 ft/min) and 0.0838 m/s (16.5 ft/min.)

Each of the coated films were heat sealed to 0.13 mm (5 mil) thick high impact polystyrene (HIPS) film. All seals were made on a Packaging Industries, Inc. (Sentinel Machinery Div. Model No. 12-1249) heat sealer fitted with 2.54 cm (1 inch) wide jaws. Except for the sealing temperature all seals were made using "standard conditions" of 0.28 MPa (40 psi) air pressure and a duration of ½ second. The sealing temperatures were varied over a range of 177 to 232 °C (350 °F to 450 °F).

The term "peel sealability" refers to the sealed area of a film where the two parts are joined together. A film's peel sealability is measured by the amount of force which must be applied to peel the layers apart, such sealability can be measured by ASTM tensile strength testing method D-882 which was used in the Examples.

TABLE 4

| PEEL SEAL STRENGTH TO HIPS Kg/2.54 cm (LB/IN) | | | |
|---|---|---|---|
| BLEND NO. | SEALING TEMPERATURE | | |
| | 177 °C (350 °F) | 204 °F (400 °F) | 232 °C (450 °F) |
| 1 | ----- | 0.616 (1.36) | 0.670 (1.48) |
| 2 | ----- | 0.453 (1.48) | 1.065 (2.35) |
| 3 | ----- | ----- | 0.870 (1.92) |
| 4 | 0.453 (0.70) | 0.589 (1.30) | 0.458 (1.01) |
| 5 | 0.326 (0.72) | 0.331 (0.73) | 0.503 (1.11) |
| 6 | 0.575 (1.27) | 0.657 (1.45) | 0.811 (1.79) |
| 7 | 0.140 (0.31) | 0.258 (0.57) | 0.824 (1.82) |
| 8 | 0.317 (0.70) | 0.911 (2.01) | 1.572 (3.47) |
| 9 | 0.589 (1.30) | 1.395 (3.08) | 1.459 (3.22) |
| 10 | 1.327 (2.93) | 1.237 (2.73) | 1.604 (3.54) |
| 11 | 0.784 (1.73) | 0.775 (1.71) | 1.101 (2.45) |
| 12 | 0.938 (2.07) | 1.386 (3.06) | 1.572 (3.47) |
| 13 | 0.983 (2.17) | 1.069 (2.36) | 1.132 (2.50) |
| 14 | 0.172 (0.38) | 0.666 (1.47) | 0.417 (0.92) |
| 15 | 0.725 (1.60) | 0.947 (2.09) | 1.191 (2.63) |
| 16 | 0.494 (1.09) | 1.241 (2.74) | 1.196 (2.64) |
| 17 | 0.498 (1.10) | 0.652 (1.44) | 0.883 (1.95) |
| 18 | 0.091 (0.20) | 0.630 (1.39) | 0.974 (2.15) |
| 19 | 0.045 (0.10) | 0.045 (0.10) | 0.181 (0.40) |
| 20 | 0.231 (0.51) | 0.344 (0.76) | 0.421 (0.93) |
| 21 | 0.236 (0.52) | 0.313 (0.69) | 0.435 (0.96) |
| 22 | 0.267 (0.59) | 0.322 (0.71) | 0.467 (1.03) |
| 23 | 0.199 (0.44) | 0.299 (0.66) | 0.349 (0.77) |
| 24 | 0.657 (1.45) | 0.322 (0.71) | 0.602 (1.33) |
| 25 | 0.199 (0.44) | 0.344 (0.76) | 0.453 (1.00) |

Samples made from Blends Nos. 6 and 10 were also heat sealed onto 0.254 mm (10 mil) plasticized clear PVC, HIPS, polypropylene homopolymer and high density polyethylene sheets under the above-mentioned sealing conditions. The peel seal strengths measured are shown in Tables 5 and 6.

TABLE 5

PEEL SEAL STRENGTH OF BLEND NO.6 kg/2.54 cm (LB/IN)

| HEAT SEAL TEMP. °C (°F) | 163 (325) | 177 (350) | 191 (375) | 204 (400) | 218 (425) |
|---|---|---|---|---|---|
| onto HIPS | 0.65 (1.44) | 0.54 (1.19) | 0.63 (1.39) | 0.72 (1.58) | 1.00 (2.21) |
| onto PVC | 0.99 (2.19) | 1.20 (2.65) | 1.51 (3.34) | 1.45 (3.22) | — |
| onto HDPE | — | 1.08 (2.38) | 1.30 (2.88) | 3.07 (6.78) | — |
| onto PP | — | 2.25 (4.96) | 2.29 (5.06) | 2.58 (5.69) | — |

TABLE 6

PEEL SEAL STRENGTH OF BLEND NO.10 kg/2.54 cm (LB/IN)

| HEAT SEAL TEMP. °C (°F) | 163 (325) | 177 (350) | 191 (375) | 204 (400) | 218 (425) |
|---|---|---|---|---|---|
| onto HIPS | 1.48 (3.27) | 1.54 (3.39) | 1.27 (2.81) | 1.20 (2.65) | 1.73 (3.83) |
| onto PVC | 1.36 (3.01) | 1.39 (3.07) | 2.34 (5.17) | 2.84 (6.27) | — |
| onto HDPE | — | 1.63 (3.59) | 1.99 (4.39) | 2.31 (5.09) | — |
| onto PP | — | 1.62 (3.57) | 2.20 (4.85) | 2.05 (4.52) | — |

All seal strength data obtained on the experimental formulations significantly exceeded the minimum target value typical for commercial lidding stock.

In summary, it has been unexpectedly found that a blend formulated in accordance with the invention can be used to provide good peel seal strength, has good processability and will bond by extrusion lamination to a polystyrene, PVC or olefinic rigid container in a laminar structure without the need for an

adhesive to achieve bonding.

**Claims**

1. A method of providing a substrate with a peelable heat seal which comprises applying to the substrate a polymer blend which comprises
   (a) 5 to 50 weight percent of a butene-1 homopolymer or copolymer having a melt index of 0.01 to 1000;
   (b) 95 to 50 weight percent of a styrenic-olefinic block copolymer; and
   (c) 0 to 30 percent by weight of polypropylene, the weight percentages of (a), (b) and (c) being based on their combined weight.

2. A method according to claim 1 wherein the blend contains from 10 to 40 percent by weight of (a); and from 90 to 60 percent by weight of (b).

3. A method according to claim 1 or 2 wherein said butene-1 homopolymer or copolymer is a crystalline isotactic polymer having a melt index of 0.4 to 20.

4. A method according to claim 3 wherein said butene-1 homopolymer or copolymer is a high molecular weight, flexible, polymer having a density of about 0.91 $g/cm^3$.

5. A method according to any one of the preceding claims wherein the styrenic-olefinic block copolymer (b) is an A-B-A block copolymer wherein the A blocks are of a monoalkenyl arene polymer and the B block is of a homopolymeric conjugated diene.

6. A method according to claim 5, wherein the B block is of polybutadiene or polyisoprene.

7. A method according to claim 5 or 6, wherein the A block is of polystyrene or poly($\alpha$-methylstyrene).

8. A method according to any one of the preceding claims, wherein the styrenic-olefinic block copolymer (b) has been hydrogenated so that at least 80% of the aliphatic unsaturation is hydrogenated but no more than 25% of the aromatic unsaturation is hydrogenated.

9. A laminar structure comprising a coextrudate of a backing material and a blend as defined in any one of the preceding claims.

10. A laminar structure comprising a backing material coated with a blend as defined in any one of claims 1 to 8.

11. A laminar structure according to claim 9 or 10, wherein said backing material is selected from polystyrene, polypropylene film, aluminum foil, nylon film, polyester film, polycarbonate film, poly-4-methyl pentene-1 film and paper.

12. A peelably sealed rigid package comprising a rigid container having a lid sealed thereon with a film comprising a blend as defined in any one of claims 1 to 8 or laminar structure as claimed in claim 9, 10 or 11.

13. A package according to claim 12 wherein the rigid container is of a styrenic polymer, nylon polyester, polyvinyl chloride or an olefinic polymer.

**Patentansprüche**

1. Verfahren, um ein Substrat mit einer abziehbaren Heißversiegelung zu versehen, umfassend das Aufbringen eines Polymergemisches umfassend
   a) 5 bis 50 Gew.-% eines Buten-1-Homopolymers oder -Copolymers mit einem Schmelzindex von 0,01 bis 1000;
   b) 95 bis 50 Gew.-% eines Styrol/Olefin-Block-Copolymers und

c) 0 bis 30 Gew.-% Polypropylen, wobei sich die Prozentangaben von a), b) und c) auf ihr kombiniertes Gewicht beziehen, auf das Substrat.

2. Verfahren nach Anspruch 1, wobei das Gemisch 10 bis 40 Gew.-% (a) und 90 bis 60 Gew.-% (b) enthält.

3. Verfahren nach Anspruch 1 oder 2, wobei das Buten-1-Homopolymer oder -Copolymer ein kristallines isotaktisches Polymer mit einem Schmelzindex von 0,4 bis 20 ist.

4. Verfahren nach Anspruch 3, wobei das Buten-1-Homopolymer oder -Copolymer ein hochmolekulares flexibles Polymer mit einer Dichte von etwa 0,91 $g/cm^3$ ist.

5. Verfahren nach einem der vorangehenden Ansprüche, wobei das Styrol/Olefin-Block-Copolymer (b) ein A-B-A-Block-Copolymer ist, wobei die A-Blöcke aus einem Monoalkenylarenpolymer und der B-Block aus einem homopolymeren konjugierten Dien bestehen.

6. Verfahren nach Anspruch 5, wobei der B-Block aus Polybutadien oder Polyisopren besteht.

7. Verfahren nach Anspruch 5 oder 6, wobei der A-Block aus Polystyrol oder Poly($\alpha$-Methylstyrol) besteht.

8. Verfahren nach einem der vorangehenden Ansprüche, wobei das Styrol/Olefin-Block-Copolymer (b) so hydriert ist, daß mindestens 80 % der aliphatisch ungesättigten Bindungen hydriert sind, aber nicht mehr als 25 % der aromatisch ungesättigten Bindungen hydriert sind.

9. Laminare Struktur, umfassend ein Coextrudat aus einem Unterlagenmaterial und einem Gemisch wie in einem der vorangehenden Ansprüche definiert.

10. Laminare Struktur, umfassend ein Unterlagenmaterial, das mit einem Gemisch wie in einem der Ansprüche 1 bis 8 definiert überzogen ist.

11. Laminare Struktur nach Anspruch 9 oder 10, wobei das Unterlagenmaterial ausgewählt ist aus Polystyrol, Polypropylenfolie, Aluminiumfolie, Nylonfolie, Polyesterfolie, Polycarbonatfolie, Poly-4-methylpenten-1-Folie und Papier.

12. Abziehbar versiegelte, starre Verpackung, umfassend einen starren Behälter mit einem Deckel, der mit einem Film darauf aufgesiegelt ist, umfassend ein Gemisch wie in einem der Ansprüche 1 bis 8 definiert oder eine laminare Struktur wie in Anspruch 9, 10 oder 11 definiert.

13. Verpackung nach Anspruch 12, wobei der starre Behälter aus einem Styrolpolymer, Nylonpolyester, Polyvinylchlorid oder einem Olefinpolymer besteht.

**Revendications**

1. Procédé pour fournir un substrat constitué d'un joint de thermo-scellage pelable qui consiste à appliquer au substrat un mélange de polymère qui comprend
(a) 5 à 50% en poids d'un homopolymère ou d'un copolymère à base de butène-1 ayant un indice de fluidité à l'état fondu compris entre 0,01 et 1000;
(b) 95 à 50% en poids d'un copolymère séquencé de type styrène-oléfine; et
(c) 0 à 30% en poids de polypropylène, les pourcentages en poids de (a), (b) et (c) étant exprimés par rapport à la combinaison de ceux-ci.

2. Procédé conforme à la revendication 1, dans lequel le mélange contient de 10 à 40% en poids de (a); et de 90 à 60% en poids de (b).

3. Procédé conforme à la revendication 1 ou 2, dans lequel l'homopolymère ou le copolymère à base de butène-1 est un polymère isotactique cristallin ayant un indice de fluidité à l'état fondu compris entre 0,4 et 20.

4. Procédé conforme à la revendication 3, dans lequel ledit homopolymère ou copolymère à base de butène-1 est un polymère flexible de forte masse moléculaire ayant une masse volumique de 0,91 $g/cm^3$.

5. Procédé conforme à une quelconque des revendications précédentes, dans lequel le copolymère séquencé de type styrène-oléfine (b) est un copolymère séquencé de type A-B-A pour lequel les séquences A sont formées d'un polymère de type monoalcényl-arène et la séquence B est formée d'un homopolymère de type diène conjugué.

6. Procédé conforme à la revendication 5 , dans lequel la séquence B est un polybutadiène ou un polyisoprène.

7. Procédé conforme à la revendication 5 ou 6, dans lequel la séquence A est un polystyrène ou un poly-($\alpha$-méthylstyrène).

8. Procédé conforme à une quelconque des revendications précédentes, dans lequel le copolymère séquencé de type styrène-oléfine (b) a subi une hydrogénation d'au moins 80% des insaturations aliphatiques et de pas plus de 25% des insaturations aromatiques.

9. Structure laminaire comprenant un coextrudat d'un matériau support et d'un mélange tel qu'il est défini dans une quelconque des revendications précédentes.

10. Structure laminaire comprenant un matériau support recouvert d'un mélange tel qu'il est défini dans une quelconque des revendications 1 à 8.

11. Structure laminaire conforme à une quelconque des revendications 9 ou 10, pour laquelle ledit matériau support est choisi parmi le polystyrène, un film de polypropylène, une feuille d'aluminium, un film de nylon, un film de polyester, un film de polycarbonate, un film de poly(méthyl-4 pentène-1) et le papier.

12. Emballage rigide scellé par un joint pelable comprenant un récipient rigide ayant un couvercle scellé à l'aide d'un film constitué d'un mélange tel qu'il est défini dans une quelconque des revendications 1 à 8 ou d'une structure laminaire telle qu'elle est revendiquée dans les revendications 9, 10 ou 11.

13. Emballage conforme à la revendication 12 dans lequel le récipient rigide est à base de polymère de type styrénique, de polyester de type nylon, de poly(chlorure de vinyle) ou de polymère de type oléfinique.